# FASCICULE DE BREVET EUROPEEN

(11) **EP 3 956 553 B1**
(45) Date de publication et mention de la délivrance du brevet: **17.07.2024**
(21) Numéro de dépôt: 20713649.0
(22) Date de dépôt: 27.03.2020
(51) Int. Cl.: F02B 31/08, F02F 1/42, F02M 35/108, F02B 31/00

(54) **CONDUIT SIAMOIS D'ADMISSION DE GAZ POUR UN CYLINDRE D'UN MOTEUR A COMBUSTION INTERNE**
SIAMESE GAS-EINLASSKANAL FÜR EINEN ZYLINDER EINES VERBRENNUNGSMOTORS
SIAMESE GAS INLET FOR AN INTERNAL COMBUSTION ENGINE CYLINDER

(30) Priorité: 16.04.2019 FR 1904024
(43) Date de publication de la demande: 23.02.2022
(73) Titulaire: IFP Energies nouvelles, 92852 Rueil-Malmaison (FR)
(72) Inventeur: GAUTROT, Xavier, 92852 RUEIL-MALMAISON CEDEX (FR); TROST, Julien, 92852 RUEIL-MALMAISON CEDEX (FR); RITTER, Martin, 92852 RUEIL-MALMAISON CEDEX (FR); LECHARD, Christophe, 92852 RUEIL-MALMAISON CEDEX (FR)
(74) Mandataire: IFP Energies nouvelles
(86) Numéro de dépôt international: PCT/EP2020/058705
(87) Numéro de publication internationale: WO 2020/212115

(56) Documents cités:
- AT-A2- 506 469
- FR-A1- 2 770 256
- GB-A- 2 553 821
- JP-A- S6 153 453

## Description

### Domaine technique

La présente invention concerne le domaine des conduits d'admission de gaz pour un moteur à combustion interne. La présente invention concerne en particulier les conduits d'admission de gaz permettant de générer un mouvement aérodynamique de gaz dans le cylindre du moteur.

Ce type de moteur comprend généralement au moins un cylindre, un piston coulissant dans ce cylindre en un mouvement rectiligne alternatif, des moyens d'admission d'un comburant, des moyens d'échappement de gaz brûlés, une chambre de combustion, et des moyens d'injection pour injecter un combustible.

Comme cela est généralement admis, lors de la conception d'un moteur, les contraintes de performances et d'émissions de polluants sont de plus en plus fortes et il convient donc de trouver de nouvelles solutions pour augmenter le rendement final du moteur.

### Technique antérieure

Un axe d'amélioration des performances du moteur est la conception des moyens d'admission de gaz.

Afin d'obtenir les performances souhaitées, il a été développé des conduits d'admission appelés conduits siamois d'admission ou conduits siamoisés. Le conduit siamois d'admission comporte une entrée et deux sorties dirigées vers le cylindre, chacune des sorties comportant une soupape d'admission et une calibration de soupape d'admission. Dans ce type de conduit d'admission, le gaz traverse le conduit siamois d'admission par l'entrée unique et est dirigée vers les deux sorties et leurs soupapes respectives. Les profils supérieur et inférieur de ce type de conduit siamois d'admission (en position d'utilisation) a sensiblement une forme de Y inversé. Ce type de dispositif d'admission, adapté pour les cylindres pourvus de deux soupapes d'admission, permet de simplifier la conception du plénum d'admission (le plénum d'admission est le volume en amont des conduits d'admission).

Des exemples de conduits siamois d'admission sont décrits notamment dans les demandes de brevet FR 2712028, JP 204144071 et WO0157376, ainsi que les demandes de brevet JP61053453 A1 et FR 2770256 A1.

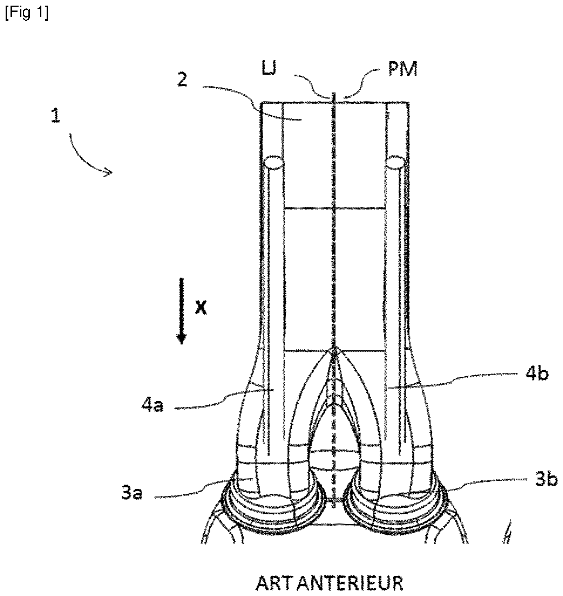

La figure 1 illustre un exemple de conduit siamois d'admission 1 selon l'art antérieur. La figure 1 est une vue du profil supérieur (extrados) du conduit siamois d'admission 1. Le conduit siamois d'admission 1 comprend une entrée 2, et deux sorties 3a et 3b. La direction d'écoulement du gaz, est illustrée par la flèche X. Sur cette figure, sont également représentées les tiges des soupapes d'admission 4a et 4b. Cette réalisation du conduit siamois d'admission 1 est symétrique par rapport à son plan médian PM. En effet, les sorties 3a et 3b sont symétriques par rapport à ce plan médian PM. L'entrée 2 est formée de manière symétrique par la jonction des deux portions de conduites selon une ligne de jonction LJ confondue avec le plan médian. Toutefois, les performances de tels conduits siamois d'admission restent inférieures aux performances des conduits d'admission séparés, en général à cause de leur conception, en effet ces conduits sont déformés pour être fusionnés, et l'évolution de la section de passage est défavorable car à la jonction des conduits, on additionne les sections des deux conduits d'un coup, alors que lorsqu'ils sont séparés, il existe une continuité des conduits. De plus, la conception de ces conduits d'admission peut être encore simplifiée.

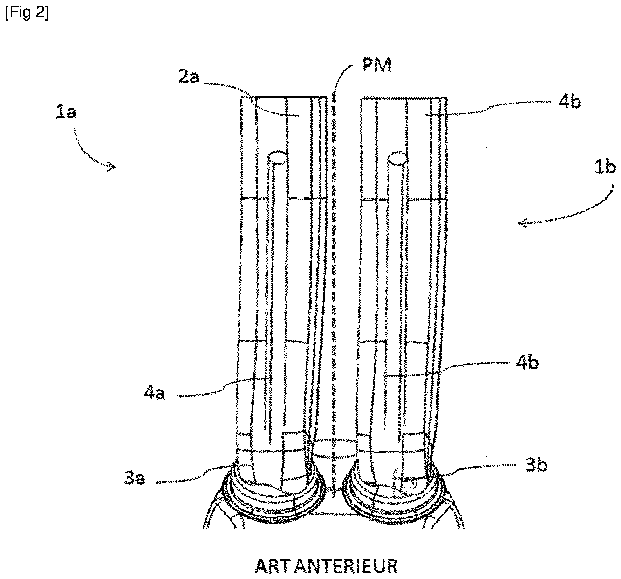

Pour rappel, la figure 2 illustre un exemple d'un dispositif d'admission comprenant deux conduits d'admission séparés 1a et 1b selon l'art antérieur. La figure 2 est une vue du profil supérieur (extrados) des deux conduits d'admission 1a et 1b. Le conduit 1a comprend une entrée 2a, une sortie 3a et une soupape 4a. Le conduit 1b comprend une entrée 2b, une sortie 3b et une soupape 4b. Ces deux conduits 1a et 1b sont indépendants, encombrants et complexe à fabriquer.

### Résumé de l'invention

Le but de l'invention est donc d'améliorer les performances et la fabrication d'un conduit siamois d'admission.

Pour cela, la présente invention concerne un conduit siamois d'admission, formé de deux conduits qui sont identiques au niveau de leur sortie, et qui sont reliés à leur entrée par une ligne de jonction distincte du plan médian du conduit siamois d'admission. Cette réalisation du conduit siamois d'admission permet d'améliorer les performances du conduit siamois d'admission (par exemple augmentation de l'énergie cinétique turbulente), et d'en simplifier la fabrication, par un procédé de moulage sans dépouille.

L'invention concerne également un tel conduit siamois d'admission avec des moyens pour générer un mouvement aérodynamique des gaz dans le cylindre de type tumble, swirl ou swumble.

L'invention concerne un conduit siamois d'admission de gaz pour un cylindre d'un moteur à combustion interne, ledit conduit siamois d'admission comprend une entrée et deux sorties dudit gaz, lesdites sorties étant identiques de part et d'autre d'un plan médian, ledit conduit siamois d'admission comprenant un premier conduit s'étendant entre ladite entrée et une première sortie dudit conduit siamois d'admission et un deuxième conduit s'étendant entre ladite entrée et une deuxième sortie dudit conduit siamois d'admission, lesdits premier et deuxième conduits étant reliés entre eux entre ladite entrée et un point d'intersection desdits premier et deuxième conduits selon une ligne de jonction. La distance entre ladite ligne de jonction et ledit plan médian décroît dans la direction de circulation dudit gaz au sein dudit conduit siamois d'admission. A l'entrée dudit conduit siamois d'admission, la section dudit premier conduit délimitée par ladite ligne de jonction représente de 4 à 5 fois,

Selon un mode de réalisation de l'invention, lesdits premier et deuxième conduits comprennent des moyens pour générer un mouvement aérodynamique du gaz au sein dudit cylindre autour d'un axe sensiblement colinéaire à l'axe dudit cylindre.

Conformément à une mise en oeuvre, lesdits premier et deuxième conduits comprennent des moyens pour générer un mouvement aérodynamique du gaz au sein dudit cylindre autour d'un axe sensiblement perpendiculaire à l'axe dudit cylindre.

Avantageusement, lesdits moyens pour générer un mouvement aérodynamique du gaz au sein dudit cylindre autour d'un axe sensiblement perpendiculaire à l'axe dudit cylindre sont constitués par la forme desdits premier et deuxième conduits, notamment au moyen d'une forme de tremplin, d'une convergence de la section de passage desdits premier et deuxième conduits, et une inclinaison desdits premier et deuxième conduits d'admission.

Selon une caractéristique, à l'entrée dudit conduit siamois d'admission, la section dudit premier conduit délimitée par ladite ligne de jonction représente de préférence de 4.5 à 5 fois, et préférentiellement sensiblement 4.7 fois, la section dudit deuxième conduit délimitée par ladite ligne de jonction.

Selon un aspect, ladite ligne de jonction passe par ledit point d'intersection desdits premier et deuxième conduits qui est situé sur ledit plan médian.

De manière avantageuse, entre ledit point de séparation desdits premier et deuxième conduits et l'entrée dudit conduit siamois d'admission, ladite ligne de jonction est formée par au moins un premier arc de cercle, un segment de droite et un deuxième arc de cercle.

De préférence, lesdits premier et deuxième arcs de cercle ont un rayon compris entre 30 et 50 mm, de préférence entre 32 et 42 mm, et préférentiellement sensiblement égal à 37 mm.

Conformément à un mode de réalisation, ledit point d'intersection desdits premier et deuxième conduits est situé sensiblement à équidistance de ladite entrée et desdites sorties du conduit siamois d'admission.

Selon une option de réalisation, au niveau dudit point d'intersection desdits premier et deuxième conduits, le rayon de raccordement est compris entre 1 et 10 mm, de préférence entre 1 et 5 mm, préférentiellement entre 2 et 3 mm.

Avantageusement, la section de ladite entrée dudit conduit siamois d'admission est sensiblement égal à la somme des sections desdites sorties dudit conduit siamois d'admission.

Selon une mise en oeuvre de l'invention, ledit conduit siamois d'admission comprend une première calibration pour une première soupape d'admission disposée à une extrémité dudit premier conduit et dirigée vers la face feu dudit cylindre, une deuxième calibration pour une deuxième soupape d'admission disposée à une extrémité dudit deuxième conduit et dirigée vers la face feu dudit cylindre.

De manière avantageuse, l'intersection entre chacun desdits premier et deuxième conduit et chaque calibration forme une génératrice rectiligne formant un angle α compris entre 5 et 45°, de préférence entre 5 et 20 °, et préférentiellement entre 8 et 15°, par rapport à un plan parallèle à ladite face feu et passant par un point d'intersection entre ledit premier ou deuxième conduit et ladite calibration.

De plus, l'invention concerne un procédé de fabrication d'un conduit siamois d'admission selon l'une des caractéristiques précédentes, dans lequel on réalise ledit conduit siamois d'admission par un procédé de moulage.

En outre, l'invention concerne un moteur à combustion interne comportant au moins un cylindre pourvu d'au moins un conduit siamois d'admission selon l'une des caractéristiques précédentes, d'au moins un conduit d'échappement, et des moyens d'injection de carburant.

D'autres caractéristiques et avantages du dispositif selon l'invention, apparaîtront à la lecture de la description ci-après d'exemples non limitatifs de réalisations, en se référant aux figures annexées et décrites ci-après.

### Liste des figures

La figure 1, déjà décrite, illustre un conduit siamois d'admission selon l'art antérieur.
La figure 2, déjà décrite, illustre deux conduits d'admission séparés selon l'art antérieur.
La figure 3 illustre un conduit siamois d'admission selon un mode de réalisation de l'invention.
La figure 4 illustre un premier conduit (conduit directeur) d'un conduit siamois d'admission selon un mode de réalisation de l'invention.
La figure 5 illustre un deuxième conduit (conduit dirigé) d'un conduit siamois d'admission selon un mode de réalisation de l'invention.
La figure 6 illustre des vues de l'intrados d'un dispositif d'admission de gaz respectivement selon une première et une deuxième variantes de réalisation de l'invention dans son positionnement en mode de fonctionnement.
La figure 7 illustre une vue de côté d'un conduit siamois d'admission selon un mode de réalisation de l'invention.
La figure 8 illustre deux courbes de l'énergie cinétique turbulente en fonction du CAD (degrés de l'angle vilebrequin), l'une pour un conduit siamois d'admission selon l'invention, et l'autre pour deux conduits d'admission séparés.
La figure 9 illustre deux courbes de dégagement de chaleur en fonction du CAD (degrés de l'angle vilebrequin), l'une pour un conduit siamois selon l'invention, et l'autre pour deux conduits d'admission séparés.

### Description des modes de réalisation

La présente invention concerne un conduit siamois d'admission de gaz pour un cylindre d'un moteur à combustion interne. Un tel conduit d'admission comprend une unique entrée par laquelle le gaz arrive et deux sorties par lesquelles le gaz sort en direction du cylindre.

Selon l'invention, les deux sorties du conduit siamois d'admission sont identiques de part et d'autre d'un plan médian : l'une peut se déduire de l'autre par translation rectiligne selon une direction perpendiculaire au plan médian. Le plan médian est un plan qui coupe le cylindre (chambre de combustion) en deux parties identiques, ainsi que le conduit siamois d'admission. De préférence, les deux sorties du conduit siamois d'admission ne sont pas symétriques par rapport au plan médian, alors que l'entrée du conduit siamois d'admission est symétrique par rapport au plan médian.

De plus, selon l'invention, le conduit siamois d'admission est formé de deux conduits, appelés premier conduit (ou conduit directeur ou principal : ce premier conduit donne la direction du siamoisage), et deuxième conduit (ou conduit dirigé ou secondaire : ce deuxième conduit « se greffe » sur le premier conduit). Le premier conduit s'étend de l'entrée du conduit siamois d'admission vers une première sortie du conduit siamois d'admission. Le deuxième conduit s'étend de l'entrée du conduit siamois d'admission vers la deuxième sortie du conduit siamois d'admission. Les premier et deuxième conduits sont reliés dans une première partie du conduit siamois d'admission (à proximité de l'entrée du conduit siamois d'admission). En d'autres termes, dans la première partie du conduit siamois d'admission, les premier et deuxième conduits partagent un unique volume dans lequel circule le gaz : il n'est prévue aucune paroi entre le premier et le deuxième conduits dans la première partie du conduit siamois d'admission. Dans une deuxième partie du conduit siamois d'admission (à proximité des sorties du conduit siamois d'admission), les premier et deuxième conduits sont séparés. En d'autres termes, dans la deuxième partie du conduit siamois d'admission, les premier et deuxième conduits délimitent des volumes séparés, dans lesquels circule le gaz formant ainsi les deux sorties du conduit siamois d'admission. Au niveau de la séparation des premier et deuxième conduits, on considère un point de séparation des premier et deuxième conduits (appelé aussi point d'intersection). Dans la première partie du conduit siamois d'admission, les premier et deuxième conduits sont reliés par une jonction suivant une ligne de jonction s'étendant entre l'entrée du conduit siamois d'admission, et le point de séparation. La ligne de jonction est formée dans le plan supérieur (extrados) ou le plan inférieur (intrados) du conduit siamois d'admission dans sa position d'utilisation. Les débits de gaz traversant chacune des sorties du conduit siamois sont sensiblement identiques. De plus, les mouvements aérodynamique de gaz formés par chacune des sorties du conduit siamois d'admission sont sensiblement identiques.

Selon l'invention, la ligne de jonction n'est pas confondue avec le plan médian du conduit siamois d'admission. Ainsi, les premier et deuxième conduits ne sont pas symétriques ni identiques par rapport au plan médian. De plus, la ligne de jonction s'éloigne du plan médian à proximité de l'entrée du gaz. En d'autres termes, à l'entrée du conduit siamois d'admission, la ligne de jonction est éloignée du plan médian, et la ligne d'admission se rapproche du plan médian en se rapprochant du point d'intersection des premier et deuxième conduits. Exprimé d'une autre manière, la distance entre la ligne de jonction et le plan médian décroit dans le sens de circulation du gaz. Cette réalisation du conduit siamois d'admission permet d'améliorer les performances du conduit siamois d'admission, en effet, le siamoisage selon l'invention est réalisé en déformant moins les premier et deuxième conduits par rapport à un siamoisage symétrique de l'art antérieur. De plus, cette réalisation du conduit siamois d'admission permet d'en simplifier la fabrication, par un procédé de moulage qui ne nécessite pas de dépouille pour le démoulage des noyaux.

De préférence, le point de séparation des premier et deuxième conduits peut être situé sur le plan médian. La ligne de jonction peut passer par le point de séparation, et donc passer par un point situé sur le plan médian.

Selon un aspect de ce mode de réalisation préféré, entre le point de séparation des premier et deuxième conduits et l'entrée du conduit siamois d'admission, la ligne de jonction est formée consécutivement par au moins un premier arc de cercle, un segment de droite et un deuxième arc de cercle. De manière avantageuse, les rayons des deux arcs de cercle peuvent être compris entre 30 et 50 mm, de préférence entre 32 et 42 mm, et peuvent valoir sensiblement 37 mm. De plus, le segment de droite peut avoir une longueur comprise entre 10 et 20 mm, et peut valoir préférentiellement sensiblement 15 mm. Cette réalisation offre un bon compromis entre facilité de fabrication et performance du conduit siamois d'admission par rapport à des conduits séparés.

Alternativement, la ligne de jonction peut être rectiligne, concave, convexe, ou l'une quelconque des combinaison de ces formes.

La position du point de séparation des premier et deuxième conduits peut être déterminée par les dimensions du conduit siamois d'admission. Selon une caractéristique, le point de séparation des premier et deuxième conduits peut être situé sensiblement à équidistance de l'entrée et des deux sorties du conduit siamois d'admission. Cette configuration permet d'optimiser les performances du conduit siamois d'admission.

Conformément à une mise en oeuvre de l'invention, le rayon de raccordement entre les premier et deuxième conduits, au niveau du point d'intersection, peut être compris entre 1 et 10 mm, de préférence entre 1 et 5 mm, et préférentiellement entre 2 et 3 mm. Ces valeurs de rayon de raccordement permettent d'avoir un bon contrôle de la valeur de la section de passage au niveau de la jonction des premier et deuxième conduits.

Selon un mode de réalisation de l'invention, les sections des premier et deuxièmes conduits à l'entrée du conduit siamois d'admission peuvent être différentes. Les sections respectives des premier et deuxième conduits sont délimitées par les parois du conduit siamois d'admission et par la ligne de jonction. De manière avantageuse, la section du premier conduit peut représenter de 4 à 5 fois, de préférence de 4.5 à 5 fois, et préférentiellement sensiblement 4.7 fois, la section du deuxième conduit à l'entrée du conduit siamois d'admission. Une telle distribution des sections favorise les performances du conduit siamois d'admission.

Afin d'optimiser le volume de gaz dans le conduit siamois d'admission, la section d'entrée du conduit siamois d'admission peut être sensiblement égal à la somme des sections de sortie du conduit siamois d'admission.

Selon un aspect, le conduit siamois d'admission peut comprendre une première calibration pour une première soupape d'admission à une extrémité du premier conduit et dirigée vers la face feu du cylindre, et une deuxième calibration pour une deuxième soupape d'admission à une extrémité du deuxième conduit et dirigée vers la face feu du cylindre. On appelle face feu ou face combustion, le plan inférieur de la culasse (du moteur à combustion interne) orthogonal à l'axe du cylindre. La calibration de la soupape d'admission est une pièce mécanique sensiblement cylindrique dans laquelle se déplace une soupape d'admission. La calibration de la soupape est insérée dans le plan inférieur de la culasse de manière à alimenter le cylindre en gaz.

Les premier et deuxième conduits comprennent un profil inférieur (intrados) et un profil supérieur (extrados) définis dans la position de fonctionnement du conduit siamois d'admission. Le profil inférieur et le profil supérieur sont reliés par deux parois latérales.

Selon un aspect de l'invention, entre le point de séparation des conduits et les sorties, la section de passage des premier et deuxième conduits peut avoir une forme sensiblement rectangulaire, avec les coins arrondis. Dans ce cas, l'intersection de chacun des premier et deuxième conduits et de la calibration de la soupape est formée par quatre arêtes : une du côté de l'intrados, une sur l'extrados, et deux latérales. De plus, la section de passage à l'entrée du conduit siamois d'admission peut avoir une forme sensiblement rectangulaire, avec les coins arrondis.

Selon un mode de réalisation de l'invention, le conduit siamois d'admission (en l'occurrence les premier et deuxième conduits) peut comprendre des moyens de déviation du gaz pour générer un mouvement aérodynamique du gaz au sein du cylindre autour d'un axe sensiblement perpendiculaire à l'axe du cylindre. En d'autres termes, les premier et deuxième conduits peuvent comprendre des moyens pour générer un mouvement aérodynamique du gaz de type tumble dans le cylindre. Le tumble a la particularité de se transformer en mouvements aérodynamiques microscopiques qui créent de la turbulence lors de la remontée du piston. C'est un mouvement macroscopique aérodynamique qui est généralement utilisé pour les moteurs à combustion interne à allumage commandé où il est un bon moyen d'obtenir une vitesse de combustion appropriée. Par ailleurs, ce mouvement est assez sensible à la géométrie de la chambre de combustion ainsi qu'à la loi de levée, aussi bien en termes d'étalement que hauteur de levée maximale. Le conduit siamois d'admission est particulièrement adapté à la génération de mouvement aérodynamique du type tumble. En effet, la conception du conduit siamois d'admission permet par la dissymétrie des sorties et par le caractère identique des sorties, de conserver les performances des conduits séparés, qui comprendraient des moyens pour générer un mouvement aérodynamique du gaz de type tumble.

Etant donné que les sorties du conduit siamois d'admission sont identiques, les premier et deuxième conduits comportent les mêmes moyens de déviation du gaz pour générer un mouvement aérodynamique du gaz de type tumble.

Les moyens de déviation du gaz peuvent comprendre une forme de « tremplin » de forme concave sur le profil inférieur (intrados) des premier et deuxième conduits. La forme de tremplin favorise le décollement du flux de gaz dans le premier ou deuxième conduit et le dirige vers la partie supérieure du premier ou deuxième conduit et donc vers la partie supérieure du cylindre afin de maximiser le mouvement aérodynamique du gaz de type tumble.

Additionnellement ou alternativement, les moyens de déviation du gaz peuvent comprendre une forme concave du profil supérieur (extrados) des premier et deuxième conduits. La forme concave du profil supérieur permet de donner une forme de convergent aux premier et deuxième conduits, ce qui favorise l'augmentation de la vitesse du gaz.

De préférence, une association de la forme de tremplin et de la concavité du profil supérieur (convergence) permet de réaliser un mouvement aérodynamique du gaz de type tumble sans aucun appendice particulier de type masque, volet ou lame.

Selon un exemple de réalisation, les moyens de déviation du gaz peuvent comprendre en outre ou alternativement une inclinaison des premier et deuxième conduit. Cette inclinaison des premier et deuxième conduits peut être définie par un angle de tangente au point d'intersection de chacun des premier et deuxième conduits avec la calibration comprise entre 0 et 45°, de préférence entre 5 et 45°. Cette inclinaison peut être couplée à la pente de la partie supérieure de la chambre de combustion du cylindre. L'inclinaison des premier et deuxième conduits permet d'incliner le flux de gaz entrant dans le cylindre pour former un mouvement aérodynamique du gaz de type tumble. Par exemple, une optimisation du mouvement aérodynamique de gaz de type tumble peut être atteinte par une tangence entre l'angle de tangence et l'angle de la pente de la partie supérieure de la chambre de combustion.

Selon un mode de réalisation de l'invention, le conduit siamois d'admission (en l'occurrence les premier et deuxième conduits) peut comprendre des moyens de déviation du gaz pour générer un mouvement aérodynamique du gaz au sein du cylindre autour d'un axe sensiblement colinéaire à l'axe du cylindre. En d'autres termes, les premier et deuxième conduits peuvent comprendre des moyens pour générer un mouvement aérodynamique du gaz de type swirl dans le cylindre. Le swirl, qui est un mouvement macroscopique de rotation du mélange carburé autour d'un axe colinéaire à l'axe du cylindre, se caractérise par une bonne conservation au cours du processus d'admission et plus spécifiquement au cours de la remontée du piston. C'est un mouvement macroscopique aérodynamique qui est généralement utilisé pour les moteurs à combustion interne à allumage par compression où il est un bon moyen d'homogénéiser le mélange carburé. Le conduit siamois d'admission est particulièrement adapté à la génération de mouvement aérodynamique du type swirl. En effet, la conception du conduit siamois d'admission permet par la dissymétrie des sorties et par le caractère identique des sorties, de conserver les performances des conduits séparés, qui comprendraient des moyens pour générer un mouvement aérodynamique du gaz de type swirl.

Etant donné que les sorties du conduit siamois d'admission sont identiques, les premier et deuxième conduits comportent les mêmes moyens de déviation du gaz pour générer un mouvement aérodynamique du gaz de type swirl.

Selon un mode de réalisation de l'invention, le dispositif d'admission est formé de telle sorte que, à l'intrados (profil inférieur) des premier et deuxième conduits, l'intersection entre chaque conduit (premier ou deuxième conduit) et la calibration de la soupape respective, forme une génératrice rectiligne formant un angle α compris entre 5 et 45°, par rapport à un plan parallèle à la face feu et passant par un point d'intersection entre le premier ou deuxième conduit et la calibration de la soupape. Ainsi, l'intersection (qui est un segment de droite) de la face inférieure du premier ou deuxième conduit avec la calibration de soupape respective est inclinée par rapport à un plan parallèle à la face feu. Cette inclinaison permet une déviation du gaz à l'entrée de la calibration, et a fortiori à l'entrée du cylindre. Cette déviation de gaz forme un mouvement aérodynamique du gaz dans le cylindre selon une direction parallèle à l'axe du cylindre, en d'autres termes un mouvement aérodynamique du gaz de type swirl. Cette inclinaison peut se traduire par une rotation du premier ou deuxième conduit au niveau de son extrémité (l'extrémité du premier ou deuxième conduit est alors vrillée), ce qui favorise le mouvement aérodynamique du gaz de type swirl. De plus, cette réalisation permet de réaliser un mouvement aérodynamique du gaz de type swirl sans aucun appendice particulier de type masque, volet ou lame. De plus, l'architecture de ces dispositifs d'admission ne présente aucune contrainte supplémentaire pour une implantation dans une culasse de moteur à combustion interne monocylindre ou multicylindre.

L'inclinaison selon un angle α compris entre 5 et 45° permet la génération d'un mouvement aérodynamique du gaz de type swirl. En dessous de 5°, l'inclinaison est insuffisante pour avoir une influence significative sur le mouvement aérodynamique du gaz dans le cylindre. Au-delà de 45°, la géométrie du premier ou deuxième conduit est complexe et difficile à réaliser et l'aérodynamique des gaz se dégrade.

Selon un mode de réalisation de l'invention, l'angle α peut être compris entre 5 et 20°, et de manière préférée entre 8 et 15°. Ces plages angulaires permettent d'optimiser le mouvement aérodynamique du gaz de type swirl.

Selon un mode de réalisation préféré, le conduit siamois d'admission comprend à la fois des moyens pour générer un mouvement aérodynamique du gaz de type tumble et à la fois des moyens pour générer un mouvement aérodynamique du gaz de type swirl. Par exemple, pour ce mode de réalisation, les variantes décrites ci-dessus peuvent être combinées. Par combinaison des mouvements aérodynamiques du gaz de type tumble et de type swirl, le conduit siamois d'admission du gaz selon l'invention permet un mouvement aérodynamique du gaz de type swumble dans le cylindre, ce qui permet de bénéficier d'une excellente homogénéisation et d'une meilleure vitesse de combustion grâce à un niveau de turbulence plus élevé lors de la phase de compression que ce qu'on observe avec les meilleurs moteurs à allumage commandé actuels. Le conduit siamois d'admission est particulièrement adapté à la génération de mouvement aérodynamique du type swumble. En effet, la conception du conduit siamois d'admission permet, par la dissymétrie des sorties et par le caractère identique des sorties, de conserver les performances des conduits séparés, qui comprendraient des moyens pour générer un mouvement aérodynamique du gaz de type swumble. De plus, l'architecture du conduit siamois d'admission ne présente aucune contrainte spécifique pour une implantation dans un culasse d'un moteur conventionnel, ce qui est un avantage en comparaison des solutions existantes pour obtenir un mouvement aérodynamique de type swumble.

Conformément à une mise en oeuvre de l'invention, chaque calibration peut comprendre un masque, qui recouvre partiellement la sortie de la calibration, pour orienter le gaz dans le cylindre et favoriser ainsi le mouvement aérodynamique du gaz.

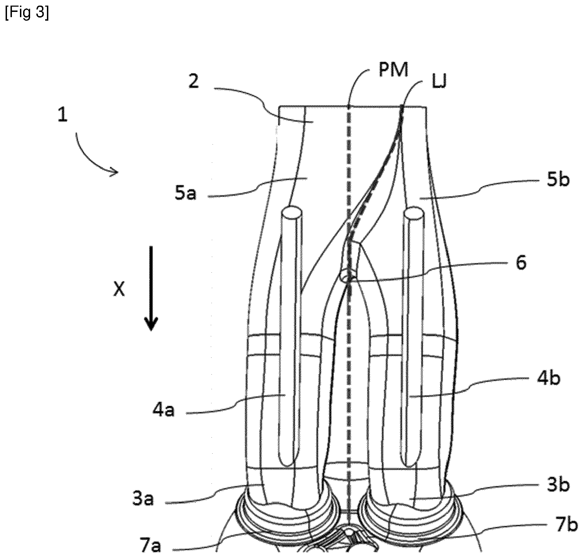

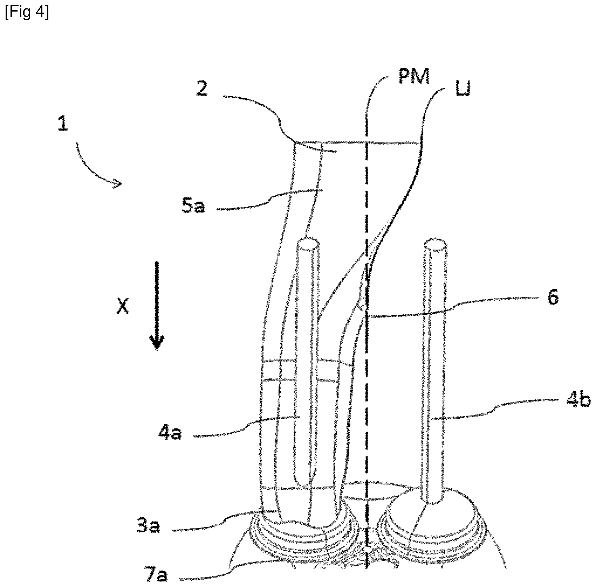

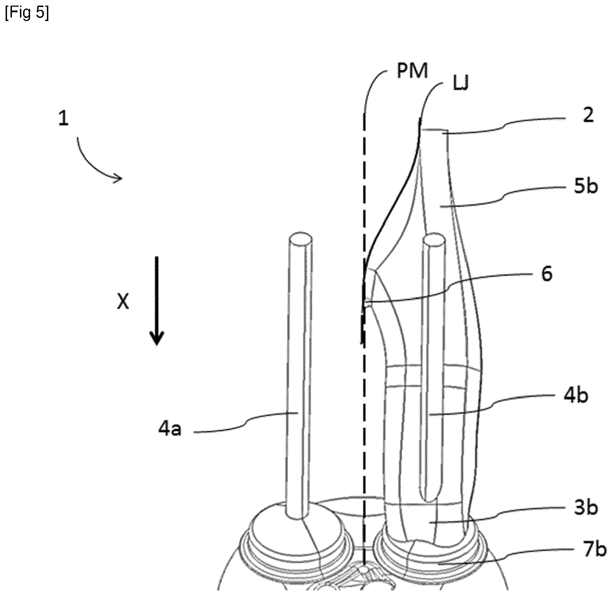

Les figures 3, 4 et 5 représentent, schématiquement et de manière non limitative, un conduit siamois d'admission selon un mode de réalisation de l'invention. Les figures 3, 4 et 5 sont des vues du côté de l'extrados du conduit siamois d'admission. La figure 3 représente le conduit siamois d'admission dans son ensemble. Les figures 4 et 5 sont des vues partielles du conduit siamois d'admission, la figure 4 représentant uniquement le conduit directeur (premier conduit) et la figure 5 représentant uniquement le conduit dirigé (deuxième conduit). Sur ces figures, la flèche X illustre la direction de circulation du gaz dans le conduit siamois d'admission, PM illustre le plan médian, et LJ la ligne de jonction.

Le conduit siamois d'admission 1 comprend une forme sensiblement de Y inversé, avec une entrée 2, et deux sorties 3a et 3b. Les deux sorties 3a et 3b sont identiques de part et d'autre du plan médian PM (elles ne sont pas symétriques par rapport au plan médian PM). Le conduit siamois d'admission 1 est formé d'un premier conduit 5a directeur et d'un deuxième conduit 5b dirigé. Le premier conduit 5a s'étend de l'entrée 2 vers une première sortie 3a. Le deuxième conduit 5b s'étend de l'entrée 2 vers une deuxième sortie 3b. Les premier et deuxième conduits 5a et 5b sont reliés dans une première zone située entre l'entrée 2 et un point de séparation 6 : dans cette zone, les premier et deuxième conduits 5a et 5b forment un unique volume. Selon le mode de réalisation illustré, le point de séparation 6 est situé sur le plan médian PM. De préférence, le point de séparation 6 peut être à équidistance de l'entrée 2 et des sorties 3a et 3b. Les premier et deuxième conduits 5a et 5b sont séparés dans une deuxième zone entre le point de séparation 6 et les sorties 3a et 3b. Dans cette première zone, les premier et deuxième conduits 5a et 5b sont joints selon la ligne de jonction LJ. La ligne de jonction LJ est non confondue avec le plan médian, contrairement à l'art antérieur illustré en figure 1. La distance de la ligne de jonction LJ et le plan médian PM décroit entre l'entrée 2 et le point de séparation 6. Pour le mode de réalisation illustré, la ligne de jonction LJ est formée consécutivement (dans le sens de circulation du gaz) d'un premier arc de cercle, d'un segment de droite, et d'un deuxième arc de cercle.

Sur ces figures, sont également représentées les tiges des soupapes d'admission 4a et 4b, qui sont respectivement situées dans les premier et deuxième conduits 5a et 5b. De plus, des calibrations 7a et 7b de soupape d'admission sont prévues aux extrémités respectives des premier et deuxième conduits 5a et 5b.

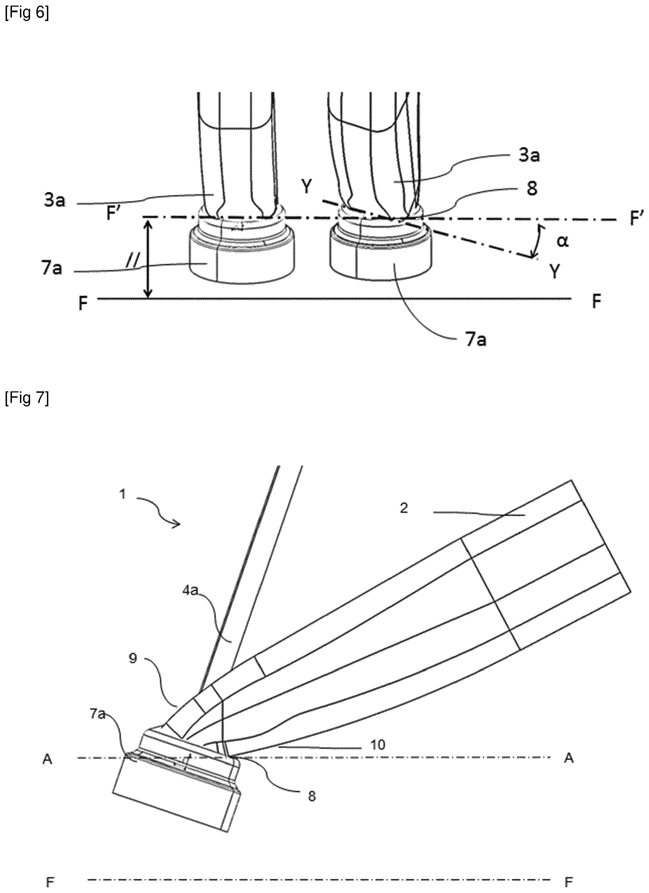

La figure 6 illustre, schématiquement et de manière non limitative, des vues de l'intrados (face inférieure) d'un des premier ou deuxième conduits. Par convention arbitraire, on utilise les références relatives au premier conduit des figures 1 à 5. La figure 6 est dans un plan perpendiculaire à la face feu. La figure de gauche correspond à un conduit selon une première variante de réalisation de l'invention sans moyens de déviation du gaz pour former un mouvement aérodynamique du gaz de type swirl. La figure de droite correspond à un dispositif selon une deuxième variante de l'invention avec, au niveau de l'intrados, une inclinaison de l'intersection entre le premier ou le deuxième conduit et la calibration de soupape pour former un mouvement aérodynamique du gaz de type swirl. Pour le mode de réalisation illustré, la section du conduit (premier ou deuxième conduit) est sensiblement rectangulaire.

Sur ces figures, la droite FF appartient au plan de la face feu (définie par le cylindre non représenté), et la direction F'F' est une droite appartenant à un plan parallèle à la face feu FF passant par un point d'intersection entre le premier conduit 3a et la calibration 7a de la soupape d'admission.

Selon la première variante de réalisation illustrée sur la figure de gauche, l'intersection 8 entre le premier conduit 3a et la calibration 4 de la soupape d'admission est un segment de droite confondu avec la droite F'F'.

Au contraire, selon la deuxième variante de réalisation illustrée sur la figure de droite, l'intersection 8 entre le premier conduit 3a et la calibration 4 de la soupape d'admission forme un segment de droite porté par une génératrice rectiligne d'axe YY inclinée d'un angle α par rapport à la droite F'F'. Cet angle α est compris entre 5 et 45°. On peut observer sur la figure de droite que cette inclinaison entraîne, à proximité du raccord, une légère rotation du premier conduit 3a, qui a une section de passage sensiblement rectangulaire.

La figure 7 illustre, schématiquement et de manière non limitative, un conduit siamois d'admission 1 selon un mode de réalisation de l'invention. Par convention arbitraire, on utilise les références relatives au premier conduit des figures 1 à 5. La figure 7 est une vue de côté (face latérale entre l'intrados et l'extrados) dans une position de fonctionnement du conduit siamois d'admission. Le conduit siamois d'admission 1 comporte une entrée 2, une soupape 4a introduite dans chaque conduit formant le conduit siamois d'admission, et une calibration 7a de chaque soupape d'admission. L'extrémité de la soupape d'admission 4a assurant le passage du gaz pour son ouverture n'est pas représentée.

Le dispositif d'admission 1 comporte en outre des moyens de déviation du gaz pour générer un mouvement aérodynamique du gaz au sein du cylindre selon une direction perpendiculaire à l'axe du cylindre (mouvement aérodynamique du gaz de type tumble). Ces moyens de déviation du gaz sont réalisés dans les premier et deuxième conduits. Ces moyens de déviation du gaz comportent une convergence 9 de la section de passage du premier ou deuxième conduit à proximité de la calibration 7 de la soupape. Cette convergence 9 correspond à une réduction de la section de passage à proximité de la calibration 7 de soupape. De plus, les moyens de déviation du gaz comprennent un tremplin 10 formé sur le profil inférieur du premier ou deuxième conduit. En outre, les moyens de déviation du gaz comprennent l'inclinaison du conduit siamois d'admission selon un angle non nul, en une direction de tangente au point d'intersection des premier et deuxième conduits avec la calibration 7, et une direction AA. La direction AA est parallèle à la droite FF appartenant au plan de la face feu.

L'intersection entre le premier ou deuxième conduit et la calibration 4 au niveau de l'intrados du premier ou deuxième conduit est notée par la référence 8.

En outre, l'invention concerne un dispositif d'admission de gaz pour un cylindre d'un moteur à combustion interne.

Le dispositif d'admission de gaz comporte :
- un conduit siamois d'admission de gaz pour l'admission d'un gaz dans un cylindre selon l'une quelconque des combinaisons de variantes décrites précédemment,
- une soupape d'admission insérée dans chacun des premier et deuxième conduits, l'ouverture de la soupape permettant l'entrée du gaz dans le cylindre, et
- une pièce de calibration de la soupape d'admission disposée à chaque extrémité de la soupape d'admission vers le cylindre, chaque calibration étant dirigée vers la face feu du cylindre, chaque calibration de la soupape d'admission est une pièce mécanique sensiblement cylindrique dans laquelle se déplace la soupape.

L'invention concerne également un ensemble comprenant un cylindre d'un moteur à combustion interne et dispositif d'admission selon l'une des variantes ou des combinaisons de variantes décrites précédemment pour l'admission d'un gaz dans le cylindre.

En outre, la présente invention concerne un moteur à combustion interne comportant au moins un cylindre, chaque cylindre étant pourvu :
- d'au moins un dispositif d'admission selon l'une des variantes ou combinaison de variantes décrites précédemment, pour l'admission d'un gaz dans le cylindre,
- d'au moins un dispositif d'échappement, pour évacuer les gaz brulés du cylindre, le dispositif d'échappement étant avantageusement équipé d'une soupape d'échappement,
- d'un piston ayant un mouvement de translation rectiligne alternatif dans le cylindre pour générer une énergie mécanique à partir de la combustion (par rotation d'un vilebrequin),
- de moyens d'injection de carburant, pour générer une combustion.

Selon un mode de réalisation, les moyens d'injection de carburant peuvent être des moyens d'injection directe, c'est-à-dire que les moyens d'injection de carburant sont disposés directement dans le cylindre.

Alternativement, les moyens d'injection de carburant peuvent être des moyens d'injection indirecte, c'est-à-dire que les moyens d'injection de carburant sont disposés dans le dispositif d'admission.

Selon une mise en oeuvre de l'invention, le moteur à combustion interne est un moteur à allumage commandé. Dans ce cas, le moteur comporte en outre au moins une bougie pour générer la combustion du mélange gaz et carburant.

Alternativement, le moteur à combustion interne est un moteur à allumage par compression. Dans ce cas, le moteur ne comporte aucune bougie pour générer la combustion du mélange gaz et carburant.

Le moteur à combustion interne peut comporter une pluralité de cylindres, notamment 3, 4, 5 ou 6 cylindres.

De préférence, le moteur à combustion peut être un moteur à quatre soupapes par cylindre.

En outre, l'invention concerne un procédé de fabrication d'un conduit siamois d'admission selon l'une quelconque des combinaisons de variantes décrites précédemment. Un tel conduit siamois d'admission est obtenu par un procédé de moulage, en particulier avec le moulage de la culasse du moteur. De préférence, grâce aux caractéristiques du conduit siamois d'admission, le moulage ne nécessite aucune dépouille pour le démoulage des noyaux, ce qui facilite la mise en oeuvre du procédé de fabrication.

En outre, la présente invention concerne l'utilisation d'un moteur à combustion interne selon l'une des variantes ou combinaisons de variantes décrites précédemment selon un cycle de Miller ou un cycle d'Atkinson.

Le cycle de Miller est un cycle thermodynamique se caractérisant par une fermeture de la ou des soupapes d'admission avant le point mort bas du piston lors de la phase admission. Cela permet d'avoir un travail récupéré plus important en plus d'un refroidissement de la charge admise. Le dispositif d'admission selon l'invention est particulièrement adapté pour une utilisation en cycle dit Miller sur une plage étendue de fonctionnement grâce à la génération d'un mouvement aérodynamique du gaz de type swumble.

Le cycle d'Atkinson est un cycle thermodynamique utilisé notamment dans les moteurs à combustion variable.

Le moteur à combustion interne selon l'invention peut être utilisé dans le domaine des applications embarquées, tels que les domaines routier, maritime ou aéronautique, ou dans le domaine des installations stationnaires, comme un groupe électrogène.

Comme il va de soi, l'invention ne se limite pas aux seules formes de décrites ci-dessus à titre d'exemple, elle embrasse au contraire toutes les variantes de réalisation.

### Exemples

Les caractéristiques et avantages du conduit siamois d'admission selon l'invention apparaîtront plus clairement à la lecture de l'exemple comparatif ci-après.

Cet exemple concerne une comparaison du conduit siamois d'admission (selon le mode de réalisation des figures 3, 4 et 5) selon l'invention avec les conduits d'admission séparés (selon la réalisation de la figure 2). Les premier et deuxième conduits du conduit siamois d'admission selon l'invention, ainsi que les conduits séparés comportent les mêmes combinaisons de moyens pour générer un mouvement aérodynamique des gaz du type swumble dans le cylindre.

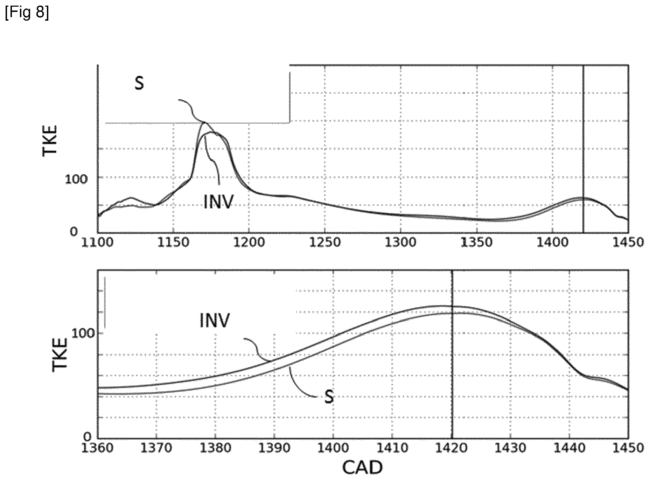

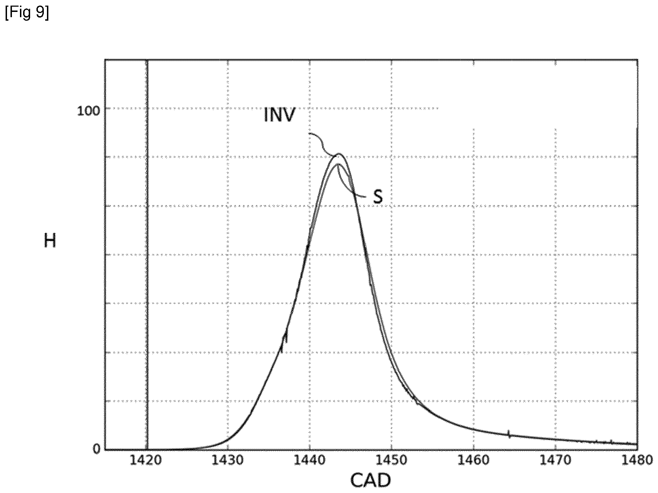

La figure 8 représente l'énergie cinétique turbulente TKE pour chaque type d'admission, en fonction du CAD (degrés de l'angle vilebrequin). La figure du bas est un zoom de la figure du haut pour une plage de CAD comprise entre 1360 et 1450. La figure 9 représente la loi de dégagement de chaleur H en fonction du CAD. Sur ces figures, les courbes relatives au conduit siamois d'admission selon l'invention sont notées INV, et les courbes relatives aux conduits séparés sont notées S.

Ces figures montrent qu'aucune dégradation de performances n'est visible malgré le siamoisage des conduits. Au contraire, on constate une légère amélioration des performances. En particulier, au point d'allumage (1420CAD) l'énergie cinétique turbulente est légèrement supérieure pour le conduit siamois d'admission selon l'invention. Cela se traduit sur la figure 9 par un dégagement de chaleur plus important lors de la combustion pour le conduit siamois d'admission. Cette augmentation du dégagement de chaleur est un indicateur direct d'un meilleur rendement du système de combustion. Ainsi, le conduit siamois selon l'invention permet d'améliorer les performances de l'admission par rapport à deux conduits séparés.

## Revendications

1. Conduit siamois d'admission de gaz pour un cylindre d'un moteur à combustion interne, ledit conduit siamois d'admission (1) comprend une entrée (2) et deux sorties (3a, 3b) dudit gaz, lesdites sorties (3a, 3b) étant identiques de part et d'autre d'un plan médian (PM), ledit conduit siamois d'admission (1) comprenant un premier conduit (5a) s'étendant entre ladite entrée (2) et une première sortie (3a) dudit conduit siamois d'admission (1) et un deuxième conduit (5b) s'étendant entre ladite entrée (2) et une deuxième sortie (3a) dudit conduit siamois d'admission (1), lesdits premier et deuxième conduits (3a, 3b) étant reliés entre eux entre ladite entrée (2) et un point d'intersection (6) desdits premier et deuxième conduits (5a, 5b) selon une ligne de jonction (LJ), la distance entre ladite ligne de jonction (LJ) et ledit plan médian (PM) étant décroissante dans la direction de circulation dudit gaz au sein dudit conduit siamois d'admission (1), **caractérisé en ce que** la section dudit premier conduit (5a) délimitée par ladite ligne de jonction (LJ) représente de 4 à 5 fois la section dudit deuxième conduit (5b) délimitée par ladite ligne de jonction (LJ).

2. Conduit siamois d'admission selon la revendication 1, dans lequel lesdits premier et deuxième conduits (5a, 5b) comprennent des moyens pour générer un mouvement aérodynamique du gaz au sein dudit cylindre autour d'un axe sensiblement colinéaire à l'axe dudit cylindre.

3. Conduit siamois d'admission selon l'une des revendications précédentes, dans lequel lesdits premier et deuxième conduits (5a, 5b) comprennent des moyens pour générer un mouvement aérodynamique du gaz au sein dudit cylindre autour d'un axe sensiblement perpendiculaire à l'axe dudit cylindre.

4. Conduit siamois d'admission selon la revendication 3, dans lequel lesdits moyens pour générer un mouvement aérodynamique du gaz au sein dudit cylindre autour d'un axe sensiblement perpendiculaire à l'axe dudit cylindre sont constitués par la forme desdits premier et deuxième conduits, notamment au moyen d'une forme de tremplin (10), d'une convergence (9) de la section de passage desdits premier et deuxième conduits, et une inclinaison desdits premier et deuxième conduits d'admission.

5. Conduit siamois d'admission selon l'une des revendications précédentes, dans lequel à l'entrée (2) dudit conduit siamois d'admission, la section dudit premier conduit (5a) délimitée par ladite ligne de jonction (LJ) représente de 4.5 à 5 fois, et préférentiellement sensiblement 4.7 fois, la section dudit deuxième conduit (5b) délimitée par ladite ligne de jonction (LJ).

6. Conduit siamois d'admission selon l'une des revendications précédentes, dans lequel ladite ligne de jonction (LJ) passe par ledit point d'intersection (6) desdits premier et deuxième conduits (5a, 5b) qui est situé sur ledit plan médian.

7. Conduit siamois d'admission selon la revendication 6, dans lequel entre ledit point d'intersection (6) desdits premier et deuxième conduits (5a, 5b) et l'entrée (2) dudit conduit siamois d'admission (1), ladite ligne de jonction (LJ) est formée par au moins un premier arc de cercle, un segment de droite et un deuxième arc de cercle.

8. Conduit siamois d'admission selon la revendication 7, dans lequel lesdits premier et deuxième arcs de cercle ont un rayon compris entre 30 et 50 mm, de préférence entre 32 et 42 mm, et préférentiellement sensiblement égal à 37 mm.

9. Conduit siamois d'admission selon l'une des revendications précédentes, dans lequel ledit point d'intersection (6) desdits premier et deuxième conduits (5a, 5b) est situé sensiblement à équidistance de ladite entrée (2) et desdites sorties (3a, 3b) du conduit siamois d'admission (1).

10. Conduit siamois d'admission selon l'une des revendications précédentes, dans lequel au niveau dudit point d'intersection (6) desdits premier et deuxième conduits (5a, 5b), le rayon de raccordement est compris entre 1 et 10 mm, de préférence entre 1 et 5 mm, préférentiellement entre 2 et 3 mm.

11. Conduit siamois d'admission selon l'une des revendications précédentes, dans lequel la section de ladite entrée dudit conduit siamois d'admission (1) est sensiblement égal à la somme des sections desdites sorties (3a, 3b) dudit conduit siamois d'admission (1).

12. Conduit siamois d'admission selon l'une des revendications précédentes, dans lequel ledit conduit siamois d'admission (1) comprend une première calibration (7a) pour une première soupape d'admission (4a) disposée à une extrémité dudit premier conduit (5a) et dirigée vers la face feu (FF) dudit cylindre, une deuxième calibration (7b) pour une deuxième soupape d'admission (4b) disposée à une extrémité dudit deuxième conduit (5b) et dirigée vers la face feu (FF) dudit cylindre.

13. Conduit siamois d'admission selon la revendication 12, dans lequel l'intersection (8) entre chacun desdits premier et deuxième conduit (5a, 5b) et chaque calibration (7a, 7b) forme une génératrice rectiligne (YY) formant un angle α compris entre 5 et 45°, de préférence entre 5 et 20 °, et préférentiellement entre 8 et 15°, par rapport à un plan parallèle à ladite face feu et passant par un point d'intersection entre ledit premier (5a) ou deuxième conduit (5b) et ladite calibration (7a, 7b).

14. Moteur à combustion interne comportant au moins un cylindre pourvu d'au moins un conduit siamois d'admission (1) selon l'une des revendications 1 à 13, d'au moins un conduit d'échappement, et des moyens d'injection de carburant.

## Patentansprüche

1. Gas-Einlasssammelkanal für einen Zylinder eines Verbrennungsmotors, wobei der Einlasssammelkanal (1) einen Gaseinlass (2) und zwei Gasauslässe (3a, 3b) umfasst, wobei die Auslässe (3a, 3b) zu beiden Seiten einer Mittelebene (PM) identisch sind, wobei der Einlasssammelkanal (1) einen ersten Kanal (5a), der sich zwischen dem Einlass (2) und einem ersten Auslass (3a) des Einlasssammelkanals (1) erstreckt, und einen zweiten Kanal (5b), der sich zwischen dem Einlass (2) und einem zweiten Auslass (3a) des Einlasssammelkanals (1) erstreckt, umfasst, wobei der erste und der zweite Kanal (3a, 3b) zwischen dem Einlass (2) und einem Schnittpunkt (6) des ersten und des zweiten Kanals (5a, 5b) entlang einer Verbindungslinie (LJ) miteinander verbunden sind, wobei der Abstand zwischen der Verbindungslinie (LJ) und der Mittelebene (PM) in Strömungsrichtung des Gases innerhalb des Einlasssammelkanals (1) abnimmt, **dadurch gekennzeichnet, dass** der durch die Verbindungslinie (LJ) begrenzte Querschnitt des ersten Kanals (5a) dem 4- bis 5-Fachen des durch die Verbindungslinie (LJ) begrenzten Querschnitts des zweiten Kanals (5b) entspricht.

2. Einlasssammelkanal nach Anspruch 1, wobei der erste und der zweite Kanal (5a, 5b) Mittel zum Erzeugen einer aerodynamischen Bewegung des Gases innerhalb des Zylinders um eine zur Zylinderachse im Wesentlichen kollineare Achse umfassen.

3. Einlasssammelkanal nach einem der vorangehenden Ansprüche, wobei der erste und der zweite Kanal (5a, 5b) Mittel zum Erzeugen einer aerodynamischen Bewegung des Gases innerhalb des Zylinders um eine zur Zylinderachse im Wesentlichen senkrechte Achse umfassen.

4. Einlasssammelkanal nach Anspruch 3, wobei die Mittel zum Erzeugen einer aerodynamischen Bewegung des Gases innerhalb des Zylinders um eine zur Zylinderachse im Wesentlichen senkrechte Achse durch die Form des ersten und des zweiten Einlasskanals gebildet werden, insbesondere anhand einer Sprungschanzenform (10), einer allmählichen Verengung (9) des Durchlassquerschnitts des ersten und des zweiten Kanals und einer Neigung des ersten und des zweiten Einlasskanals.

5. Einlasssammelkanal nach einem der vorangehenden Ansprüche, wobei am Einlass (2) des Einlasssammelkanals der durch die Verbindungslinie (LJ) begrenzte Querschnitt des ersten Kanals (5a) dem 4,5- bis 5-Fachen und vorzugsweise im Wesentlichen dem 4,7-Fachen des durch die Verbindungslinie (LJ) begrenzten Querschnitts des zweiten Kanals (5b) entspricht.

6. Einlasssammelkanal nach einem der vorangehenden Ansprüche, wobei die Verbindungslinie (LJ) durch den Schnittpunkt (6) des ersten und des zweiten Kanals (5a, 5b) verläuft, der sich in der Mittelebene befindet.

7. Einlasssammelkanal nach Anspruch 6, wobei zwischen dem Schnittpunkt (6) des ersten und des zweiten Kanals (5a, 5b) und dem Einlass (2) des Einlasssammelkanals (1) die Verbindungslinie (LJ) durch mindestens einen ersten Kreisbogen, einen Geradenabschnitt und einen zweiten Kreisbogen ausgebildet ist.

8. Einlasssammelkanal nach Anspruch 7, wobei der erste und der zweite Kreisbogen einen Radius zwischen 30 und 50 mm, vorzugsweise zwischen 32 und 42 mm und vorzugsweise von 37 mm aufweisen.

9. Einlasssammelkanal nach einem der vorangehenden Ansprüche, wobei sich der Schnittpunkt (6) des ersten und des zweiten Kanals (5a, 5b) im Wesentlichen äquidistant zum Einlass (2) und zu den Auslässen (3a, 3b) des Einlasssammelkanals (1) befindet.

10. Einlasssammelkanal nach einem der vorangehenden Ansprüche, wobei am Schnittpunkt (6) des ersten und des zweiten Kanals (5a, 5b) der Verbindungsradius zwischen 1 und 10 mm, vorzugsweise zwischen 1 und 5 mm, vorzugsweise zwischen 2 und 3 mm beträgt.

11. Einlasssammelkanal nach einem der vorangehenden Ansprüche, wobei der Querschnitt des Einlasses des Einlasssammelkanals (1) im Wesentlichen der Summe der Querschnitte der Auslässe (3a, 3b) des Einlasssammelkanals (1) entspricht.

12. Einlasssammelkanal nach einem der vorangehenden Ansprüche, wobei der Einlasssammelkanal (1) eine erste Kalibrierung (7a) für ein erstes Einlassventil (4a), das an einem Ende des ersten Kanals (5a) angeordnet und in Richtung der Feuerseite (FF) des Zylinders gewandt ist, und eine zweite Kalibrierung (7b) für ein zweites Einlassventil (4b), das an einem Ende des zweiten Kanals (5b) angeordnet und in Richtung der Feuerseite (FF) des Zylinders gewandt ist, umfasst.

13. Einlasssammelkanal nach Anspruch 12, wobei der Schnittpunkt (8) zwischen jedem des ersten und des zweiten Kanals (5a, 5b) und jeder Kalibrierung (7a, 7b) eine geradlinige Mantellinie (YY) bildet, die einen Winkel α zwischen 5 und 45°, vorzugsweise zwischen 5 und 20° und vorzugsweise zwischen 8 und 15° in Bezug auf eine Ebene bildet, die zur Feuerseite parallel ist und durch einen Schnittpunkt zwischen dem ersten (5a) oder dem zweiten Kanal (5b) und der Kalibrierung (7a, 7b) verläuft.

14. Brennkraftmaschine mit mindestens einem Zylinder, der mit mindestens einem Einlasskanal (1) nach einem der Ansprüche 1 bis 13, mindestens einem Abgaskanal und Kraftstoffeinspritzmitteln versehen ist.

## Claims

1. Siamese gas intake port for a cylinder of an internal combustion engine, said Siamese intake port (1) comprising an inlet (2) and two outlets (3a, 3b) for said gas, said outlets (3a, 3b) being identical on either side of a mid-plane (PM), said Siamese intake port (1) comprising a first port (5a) extending between said inlet (2) and a first outlet (3a) of said Siamese intake port (1), and a second port (5b) extending between said inlet (2) and a second outlet (3a) of said Siamese intake port (1), said first and second ports (3a, 3b) being connected to one another between said inlet (2) and a point of intersection (6) of said first and second ports (5a, 5b) along a junction line (LJ), the distance between said junction line (LJ) and said mid-plane (PM) decreasing in the direction of circulation of said gas within said Siamese intake port (1), **characterized in that** the cross section of said first port (5a) delimited by said junction line (LJ) represents from 4 to 5 times the cross section of said second port (5b) delimited by said junction line (LJ).

2. Siamese intake port according to Claim 1, wherein said first and second ports (5a, 5b) comprise means for generating an aerodynamic movement of the gas within said cylinder about an axis substantially collinear to the axis of said cylinder.

3. Siamese intake port according to either of the preceding claims, wherein said first and second ports (5a, 5b) comprise means for generating an aerodynamic movement of the gas within said cylinder about an axis substantially perpendicular to the axis of said cylinder.

4. Siamese intake port according to Claim 3, wherein said means for generating an aerodynamic movement of the gas within said cylinder about an axis substantially perpendicular to the axis of said cylinder are formed by the shape of said first and second ports, notably by means of a springboard shape (10), of a convergence (9) of the passage cross section of said first and second ports, and an inclination of said first and second intake ports.

5. Siamese intake port according to one of the preceding claims, wherein, at the inlet (2) of said Siamese intake port, the cross section of said first port (5a) delimited by said junction line (LJ) represents from 4.5 to 5 times, and preferably substantially 4.7 times, the cross section of said second port (5b) delimited by said junction line (LJ).

6. Siamese intake port according to one of the preceding claims, wherein said junction line (LJ) passes through said point of intersection (6) of said first and second ports (5a, 5b), which is located on said mid-plane.

7. Siamese intake port according to Claim 6, wherein, between said point of intersection (6) of said first and second ports (5a, 5b) and the inlet (2) of said Siamese intake port (1), said junction line (LJ) is formed by at least a first circular arc, a straight-line segment and a second circular arc

8. Siamese intake port according to Claim 7, wherein said first and second circular arcs have a radius of between 30 and 50 mm, preferably between 32 and 42 mm, and preferably substantially equal to 37 mm.

9. Siamese intake port according to one of the preceding claims, wherein said point of intersection (6) of said first and second ports (5a, 5b) is located substantially equidistantly from said inlet (2) and said outlets (3a, 3b) of the Siamese intake port (1).

10. Siamese intake port according to one of the preceding claims, wherein, at said point of intersection (6) of said first and second ports (5a, 5b), the fillet radius is between 1 and 10 mm, preferably between 1 and 5 mm, preferably between 2 and 3 mm.

11. Siamese intake port according to one of the preceding claims, wherein the cross section of said inlet of said Siamese intake port (1) is substantially equal to the sum of the cross sections of said outlets (3a, 3b) of said Siamese intake port (1).

12. Siamese intake port according to one of the preceding claims, wherein said Siamese intake port (1) comprises a first calibration part (7a) for a first intake valve (4a) arranged at one end of said first port (5a) and directed towards the combustion face (FF) of said cylinder, and a second calibration part (7b) for a second intake valve (4b) arranged at one end of said second port (5b) and directed towards the combustion face (FF) of said cylinder.

13. Siamese intake port according to Claim 12, wherein the intersection (8) between each of said first and second ports (5a, 5b) and each calibration part (7a, 7b) forms a rectilinear generatrix (YY) forming an angle α of between 5 and 45°, preferably between 5 and 20°, and preferably between 8 and 15°, with respect to a plane parallel to said combustion face and passing through a point of intersection between said first port (5a) or second port (5b) and said calibration part (7a, 7b).

14. Internal combustion engine comprising at least one cylinder provided with at least one Siamese intake port (1) according to one of Claims 1 to 13, with at least one exhaust port, and with fuel injection means.
